# EUROPEAN PATENT APPLICATION

(11) **EP 4 439 835 A1**
(43) Date of publication of application: **02.10.2024**
(21) Application number: 23769793.3
(22) Date of filing: 14.03.2023
(51) Int. Cl.: H01M 50/249

(54) **BATTERY PACK AND VEHICLE**

(30) Priority: 14.03.2022 CN 202220563486 U
(71) Applicant: BYD Company Limited, Shenzhen, Guangdong 518118 (CN)
(72) Inventor: TANG, Jianglong, Shenzhen, Guangdong 518118 (CN); LI, Jianqiang, Shenzhen, Guangdong 518118 (CN); LIAO, Zhengyuan, Shenzhen, Guangdong 518118 (CN); WAN, Long, Shenzhen, Guangdong 518118 (CN); HE, Wei, Shenzhen, Guangdong 518118 (CN)
(74) Representative: Dehns Germany Partnerschaft mbB
(86) International application number: PCT/CN2023/081404
(87) International publication number: WO 2023/174291

(57) **Abstract**

The present invention discloses a battery pack and a vehicle. The battery pack includes: a battery core; a tray bottom plate (10), where the tray bottom plate (10) has a pressed area (112), and the pressed area (112) has an electrode core pressing area; and a side beam (23), having a side beam body with a supporting portion (22). In a first direction of the side beam (23), an orthographic projection of the supporting portion (22) and an orthographic projection of the electrode core pressing area have an overlapping area. In a second direction of the side beam (23), the orthographic projection of the supporting portion (22) and the orthographic projection of the electrode core pressing area have an overlapping length of M1, and M1 meets the relation formula: 9 mm ≤ M1.

## Description

### CROSS-REFERENCE TO RELATED APPLICATIONS

The present disclosure claims priority to and benefits of Chinese Patent Application No 202220563486X filed by BYD Company Limited on March 14, 2022 and entitled "BATTERY PACK AND VEHICLE".

### FIELD

The present disclosure relates to the technical field of battery packs, and specifically to a battery pack and a vehicle having the battery pack.

### BACKGROUND

In related art, a battery pack includes a battery tray and the battery tray includes a side frame and a tray bottom plate. The side frame and the tray bottom plate are welded to form the battery tray. The tray bottom plate is configured as a plate structure to support the battery core. The tray bottom plate mainly bears the weight of the battery core, resulting in a large thickness of the tray bottom plate, which is not conducive to the lightweight design and the reduction of cost of the battery pack.

### SUMMARY

The present disclosure aims to at least solve one of the technical problems in related art. To this end, an object of the present disclosure is to provide a battery pack. A tray bottom plate of the battery pack bears only a small fraction of the weight of the battery core, which is beneficial to the lightweight design and the reduction of cost of the battery pack, reduces the risk of vibration failure of the battery pack, and ensure the vibration safety of the battery pack.

The present disclosure further provides a vehicle.

The battery pack according to the present disclosure includes: a battery core; a tray bottom plate, where the tray bottom plate has a pressed area configured to support the battery core, and the pressed area has an electrode core pressing area configured to support an electrode core of the battery core; and a side beam, where the side beam has a supporting portion extending toward the pressed area, and the supporting portion is configured to support the tray bottom plate. In a first direction of the side beam, an orthographic projection of the supporting portion and an orthographic projection of the electrode core pressing area have an overlapping area. In a second direction of the side beam, the orthographic projection of the supporting portion and the orthographic projection of the electrode core pressing area have an overlapping length of M1, and M1 meets the relation formula: 9mm≤M1. The first direction of the side beam is perpendicular to the second direction of the side beam.

In accordance with the battery pack according to the present disclosure, by providing the supporting portion, the side beam mainly bears most of the weight of the battery core. The tray bottom plate bears only a small fraction of the weight of the battery core, so the thickness of the tray bottom plate is reduced, which is beneficial to the lightweight design and the reduction of cost of the battery pack. Given an overlapping length of M1 between the orthographic projection of the supporting portion and the orthographic projection of the electrode core pressing area, the structural strength of the battery pack is ensured, to reduce the risk of vibration failure of the battery pack, and ensure the vibration safety of the battery pack.

In some embodiments of the present disclosure, M1≤300mm.

In some embodiments of the present disclosure, the orthographic projection of the supporting portion in the first direction of the side beam and an orthographic projection of the battery core in the first direction of the side beam has an overlapping length of M2 in the second direction of the side beam, the battery core has a length of M3, and 0.1≤M2/M3≤0.125. The length direction of the battery core is consistent with the second direction of the side beam.

In some embodiments of the present disclosure, the orthographic projection of the supporting portion in the first direction of the side beam and an orthographic projection of the pressed area in the first direction of the side beam has an overlapping length of M2 in the second direction of the side beam, and M2 meets the relation formula: 12mm≤M2≤18mm.

In some embodiments of the present disclosure, the length of the supporting portion in the second direction of the side beam is M4, and M4 meets the relation formula: 45mm≤M4≤70mm.

In some embodiments of the present disclosure, the side beam includes a side beam body. The side beam body is connected to the supporting portion at a side close to the pressed area. The distance between the pressed area and an end of the supporting portion away from the pressed area is M5, and M5 meets the relation formula: 33mm≤M5≤52mm.

In some embodiments of the present disclosure, the side beam is configured as an integrally formed component.

In some embodiments of the present disclosure, the side beam body defines a cavity, and the side beam body has a partition portion. The partition portion is located in the cavity, and the partition portion is obliquely connected between a top wall and a bottom wall of the cavity to divide the cavity into multiple sub-cavities.

In some embodiments of the present disclosure, the multiple sub-cavities are arranged in the second direction of the side beam in sequence.

In some embodiments of the present disclosure, the tray bottom plate includes a bottom plate body and an extension portion. The bottom plate body defines an accommodating groove for accommodating the battery core, a bottom wall of the accommodating groove has the pressed area, the extension portion extends along a peripheral edge of the bottom plate body, the bottom plate body is mounted to the side beam, and the extension portion is located above the side beam and arranged on the side beam in a height direction of the battery pack.

In some embodiments of the present disclosure, the battery pack further includes: a cover. The cover is covered at an open end of the accommodating groove to define an accommodating cavity configured to accommodate the battery core, and the cover is connected to the side beam.

In some embodiments of the present disclosure, multiple side beams are provided. Two side beams among the multiple side beams arranged opposite to each other in a width direction of the battery pack both have the supporting portion, or two side beams among the multiple side beams arranged opposite to each other in a length direction of the battery pack both have the supporting portion.

The vehicle according to the present disclosure includes a battery pack as described above.

Additional aspects and advantages of the present disclosure will be partly given in some of which will become apparent from the following description, or can be understood through practice of the present disclosure.

### BRIEF DESCRIPTION OF THE DRAWINGS

FIG. 1 is an exploded view of a battery pack according to an embodiment of the present disclosure.
FIG. 2 is a cross-sectional view of a battery pack according to an embodiment of the present disclosure.
FIG. 3 is a partially enlarged view of part A in FIG. 2.
FIG. 4 schematically shows an assembly of a battery tray and a battery core according to an embodiment of the present disclosure.
FIG. 5 is a schematic view of a battery tray according to an embodiment of the present disclosure.
FIG. 6 is an exploded view of a battery tray according to an embodiment of the present disclosure.
FIG. 7 schematically shows a tray bottom plate of a battery tray according to an embodiment of the present disclosure.
FIG. 8 is a schematic view of a side frame of a battery tray according to an embodiment of the present disclosure.
FIG. 9 is a schematic view of a side beam of a battery tray according to an embodiment of the present disclosure.
FIG. 10 is a partially enlarged view of part B in FIG. 9.
FIG. 11 is a partially enlarged view of an assembly of a battery tray and a battery core according to an embodiment of the present disclosure.
FIG. 12 is a cross-sectional view of a side beam according to an embodiment of the present disclosure.
FIG. 13 schematically shows an assembly of a battery core, a tray bottom plate, and a side beam according to the present disclosure.
FIG. 14 schematically shows a vehicle according to the present disclosure.

### DETAILED DESCRIPTION

Embodiments of the present disclosure are described in detail below, and examples of the embodiments are shown in accompanying drawings, where the same or similar elements or the elements having the same or similar functions are denoted by the same or similar reference numerals throughout the description. The embodiments described below with reference to the accompanying drawings are exemplary and are merely intended to describe the present disclosure, and cannot be construed as a limitation to the present disclosure.

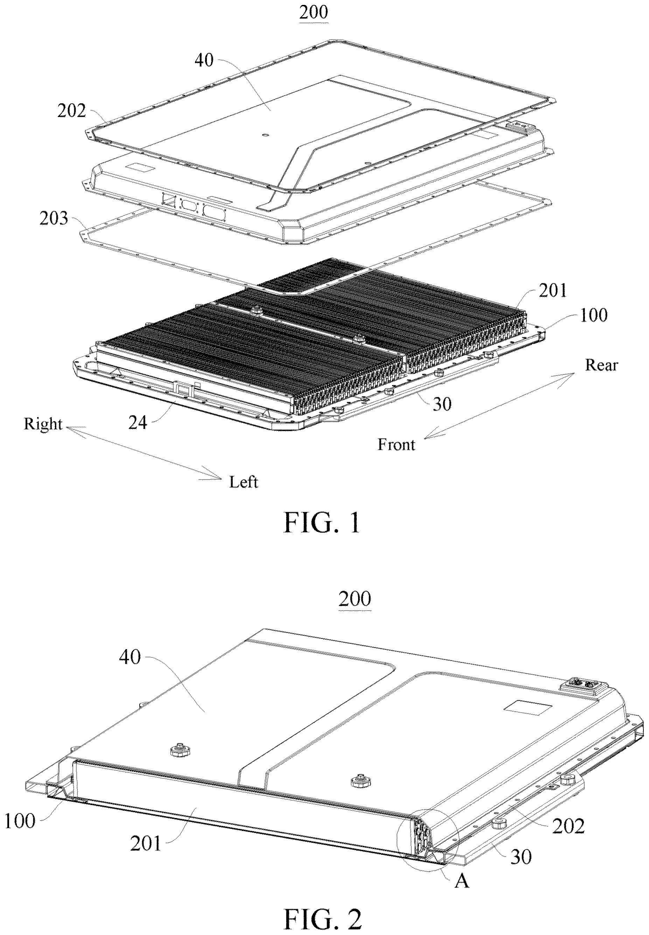

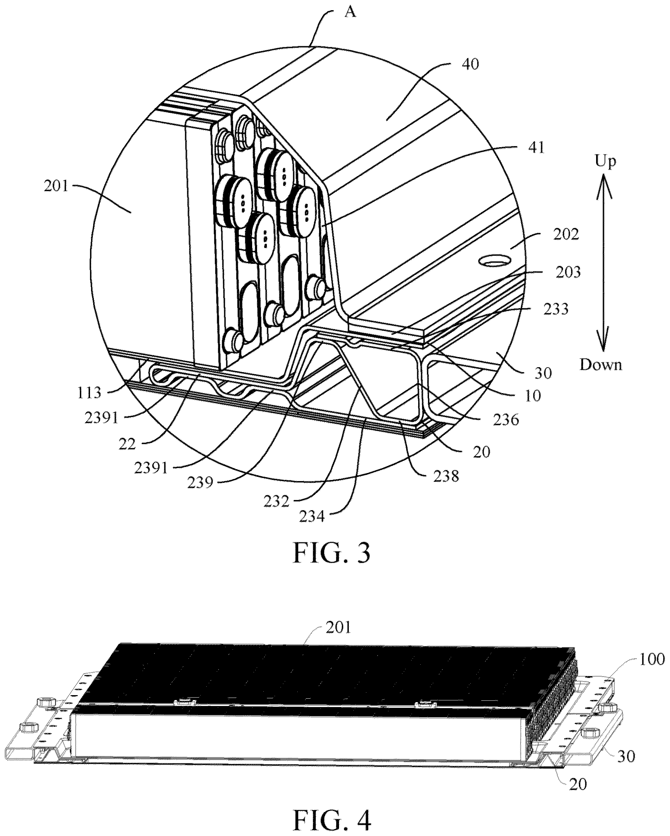

A battery pack 200 according to an embodiment of the present disclosure will be described below with reference to FIGs. 1 to 13. The battery pack 200 includes a battery tray 100 and a battery core 201. The battery tray 100 includes a side frame 20 and a tray bottom plate 10. The side frame 20 defines a mounting space 21, and a bottom plate body 11 of the tray bottom plate 10 is mounted in the mounting space 21. The side frame 20 includes a side beam 23, and multiple side beams 23 are connected to form the side frame 20. The side beam 23 includes a side beam body 231.

As shown in FIGs. 1 to 13, in accordance with the battery pack 200 according to the embodiment of the present disclosure, the tray bottom plate 10 has a pressed area 112 configured to support the battery core 201. The pressed area 112 refers to an area where the orthographic projection of the tray bottom plate 10 overlaps with the orthographic projection of the battery core 201 in a first direction of the side beam 23, when the battery core 201 is located on the tray bottom plate 10. Alternatively, it can be considered as a contact area between the battery core 201 and the tray bottom plate 10 when the battery core 201 is located on the tray bottom plate 10. The contact area includes an area where the battery core 201 is in direct contact or indirect contact with the tray bottom plate 10. For example, the battery core 201 is in indirect contact with the tray bottom plate 10 when there is an adhesive or a cooling structure between the battery core 201 and the tray bottom plate 10, and the battery core 201 is in direct contact with the tray bottom plate 10 when there is no an additional object between the battery core 201 and the tray bottom plate 10. Alternatively, it can be considered that an area where the weight of the battery core 201 directly acts on the tray bottom plate 10 is the pressed area 112. The orthographic projection of the tray bottom plate 10 in the first direction of the side beam 23 is the projection of the tray bottom plate 10 in a plane perpendicular to the first direction of the side beam 23. The orthogonal projection of the battery core 201 in the first direction of the side beam 23 is the projection of the battery core 201 in a plane perpendicular to the first direction of the side beam 23.

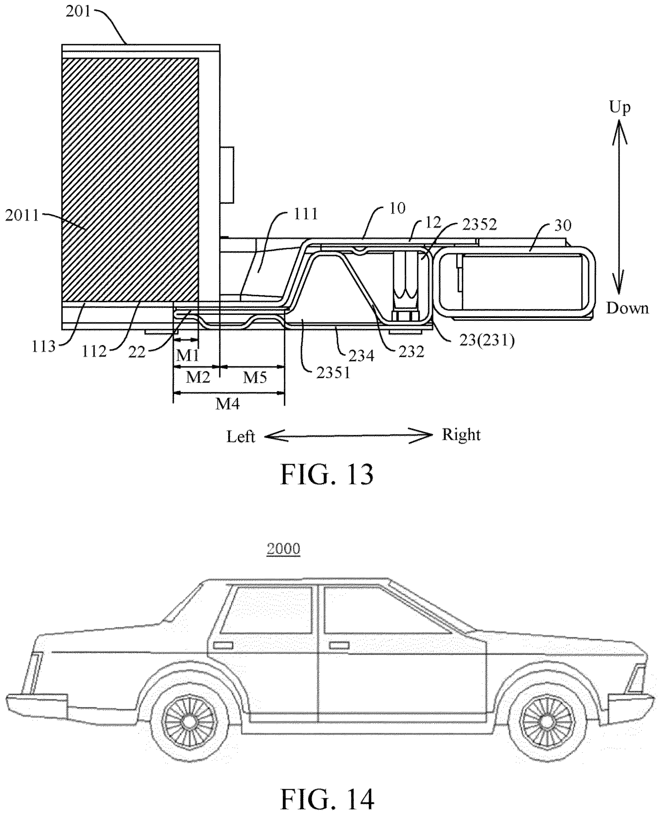

When the battery core 201 is mounted in the battery tray 100, the battery core 201 is located in the pressed area 112. The pressed area 112 has an electrode core pressing area 1121 configured to support an electrode core 2011 of the battery core 201. The electrode core pressing area 1121 refers to an area where the orthographic projection of the tray bottom plate 10 overlaps with the orthographic projection of the electrode core 2011 in the first direction of the side beam 23, when the battery core 201 is located on the tray bottom plate 10. The side beam 23 has a supporting portion 22 extending toward the pressed area 112. The supporting portion 22 is configured to support the tray bottom plate 10. In the first direction of the side beam 23, the orthographic projection of the supporting portion 22 and the orthographic projection of the compressed area 112 have an overlapping area, the orthographic projection of the supporting portion 22 and the orthographic projection of the electrode core pressing area 1121 have an overlapping area, and the orthographic projection of the supporting portion 22 and the orthographic projection of electrode core pressing area 1121 have an overlapping length of M1 in a second direction of the side beam 23, where M1 meets the relation formula: 9mm≤M1. The first direction of the side beam 23 is perpendicular to the second direction of the side beam 23. It is to be understood that when the battery pack 200 is arranged in a pattern as shown in FIG. 13, the first direction of the side beam 23 refers to an up-down direction as shown in FIG. 13, and the width direction of the side beam 23 refers to a left-right direction as shown in FIG. 13. In some embodiments, the first direction of the side beam 23 may be a height direction of the side beam 23, or consistent with a height direction of the battery pack 200. The second direction of the side beam 23 may be a width direction of the side beam 23, or consistent with a width direction or a length direction of the battery pack 200.

By providing the supporting portion 22 to support the tray bottom plate 10, and by the fact that in the first direction of the side beam 23, the orthographic projection of the supporting portion 22 and the orthographic projection of the electrode core pressing area 1121 have an overlapping area, the battery core 201 is loaded on the side beam 23, the side beam 23 bears most of the weight of the battery core 201, and the tray bottom plate 10 substantially does not bear the weight of the battery core 201 or bears only a small fraction of the weight of the battery core 201, greatly reducing the weight bearing requirement for the tray bottom plate 10. A thinner tray bottom plate 10 can meet the requirement for bearing the battery core 201, the thickness of the tray bottom plate 10 can be reduced, and the tray bottom plate 10 can be made of a material with lower strength and small thickness. In some optional embodiment, the tray bottom plate 10 is configured as an insulating member. In some optional embodiment, the tray bottom plate 10 is configured as a nonmetallic member. The tray bottom plate 10 may be formed of a lightweight nonmetallic composite material. For example, the lightweight nonmetallic composite material can be made of a resin and glass fiber, where the resin can be epoxy resin or polyurethane, which is not limited in the present disclosure. The lightweight nonmetallic composite material can also be a composite material that is made of other resins and glass fiber and has the same function. Such an arrangement can reduce the weight of the tray bottom plate 10, which is beneficial to the lightweight design of the battery tray 100 and the battery pack 200. The existing tray bottom plate 10 is made of an aluminum material. In the present disclosure, the tray bottom plate 10 is formed of a nonmetallic composite material, which reduces the production cost of the tray bottom plate 10, and facilitates the reduction of the production cost of the battery tray 100 and the battery pack 200. It is to be understood that the tray bottom plate 10 formed of a nonmetallic composite material has excellent electrical insulation performance. When a serious bottom scratching accident occurs to the vehicle 2000, the battery pack 200 will not have the risks such as high-voltage arcing.

In the second direction of the side beam 23, by setting the overlapping length between the orthographic projection of the supporting portion 22 and the orthographic projection of the electrode core pressing area 1121 to be greater than or equal to 9 mm, the supporting portion 22 is enabled to well support the electrode core 2011 while the structure strength of the battery pack 200 is ensured, and the risk of vibration failure of the electrode core 2011 is reduced, to reduce the risk of vibration failure of the battery pack 200, and ensure the vibration safety of the battery pack 200. Further, by setting the overlapping length between the orthographic projection of the supporting portion 22 and the orthographic projection of the electrode core pressing area 1121 to be 9 mm, the material of the side beam 23 can be minimized while the supporting portion 22 is ensured to reliably support the electrode core 2011, which is beneficial to the lightweight design of the side beam 23 and the battery pack 200, and reduces the manufacturing cost of the side beam 23, and the battery pack 200.

In some embodiments of the present disclosure, M1≤300mm, that is to say, 9mm≤M1≤300mm. This arrangement can minimize the material used to manufacture the side beam 23 while the vibration safety of the battery pack 200 is ensured and further reduce the risk of vibration failure of the electrode core 2011, to further reduce the risk of vibration failure of the battery pack 200, further ensure the vibration safety of the battery pack 200, and make the overlapping length between the orthographic projection of the supporting portion 22 and the orthographic projection of the electrode core pressing area 1121 reasonable.

In some embodiments of the present disclosure, as shown in FIG. 13, the battery core 201 is arranged to extend in the left-right direction as shown in FIG. 13. The orthographic projection of the supporting portion 22 in the first direction of the side beam 23 and the orthographic projection of battery core 201 in the first direction of the side beam 23 has an overlapping length of M2 in the second direction of the side beam 23, the battery core 201 has a length of M3, and 0.1≤M2/M3≤0.125. The length direction of the battery core 201 is consistent with the second direction of the side beam 23. Such an arrangement can ensure a supporting area of the supporting portion 22 to support the battery core 201, and allows the supporting portion 22 to reliably support the battery core 201, to further reduce the risk of vibration failure of the battery core 201, further reduce the risk of vibration failure of the battery pack 200, and further ensure the vibration safety of the battery pack 200.

In some embodiments of the present disclosure, the orthographic projection of the supporting portion 22 in the first direction of the side beam 23 and the orthographic projection of pressed area 112 in the first direction of the side beam 23 has an overlapping length of M2 in the second direction of the side beam 23, and M2 meets the relation formula: 12mm≤M2≤18mm. Further, M2 is 15 mm. Such an arrangement can ensure a supporting area of the supporting portion 22 to support the battery core 201, and allows the supporting portion 22 to reliably support the battery core 201, to further reduce the risk of vibration failure of the battery core 201, further reduce the risk of vibration failure of the battery pack 200, and further ensure the vibration safety of the battery pack 200.

In some embodiments of the present disclosure, as shown in FIG. 13, the length of the supporting portion 22 in the second direction of the side beam 23 is M4, and M4 meets the relation formula: 45mm≤M4≤70mm. For example, M4 is 60 mm. Such an arrangement can ensure a length dimension of the supporting portion 22 in the second direction to support the electrode core 2011, further reduce the risk of vibration failure of the battery core 201, and make the length dimension of the supporting portion 22 in the second direction reasonable.

In some embodiments of the present disclosure, the side beam 23 includes a side beam body 231. The side beam body 231 is connected to the supporting portion 22 at a side close to the pressed area 112. The distance between the pressed area 112 and an end of the supporting portion 22 away from the pressed area 112 is M5, and M5 meets the relation formula: 33mm≤M5≤52mm. When the battery core 201 and the battery tray 100 are arranged in a pattern as shown in FIG. 13, for example, the distance between a right end of the battery core 201 and the end of the supporting portion 22 away from the pressed area 112 is described. The distance between a right end portion of the pressed area 112 and the end of the supporting portion 22 away from the pressed area 112 is M5. After the battery core 201 is located in the pressed area 112, such an arrangement can ensure that there is a sufficient distance between the battery core 201 and the side beam body 231, to prevent the battery core 201 from collision with the side beam body 231, thus improving the safety of the battery pack 200 during use.

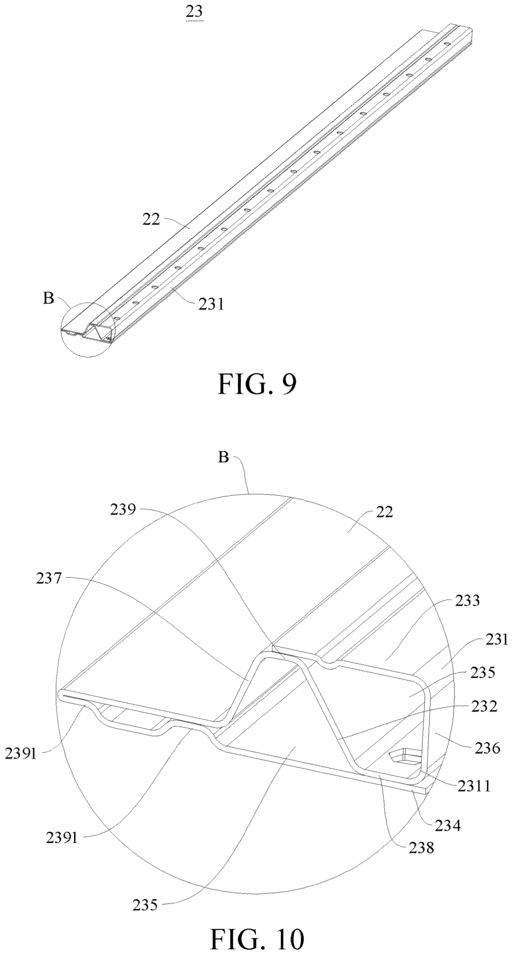

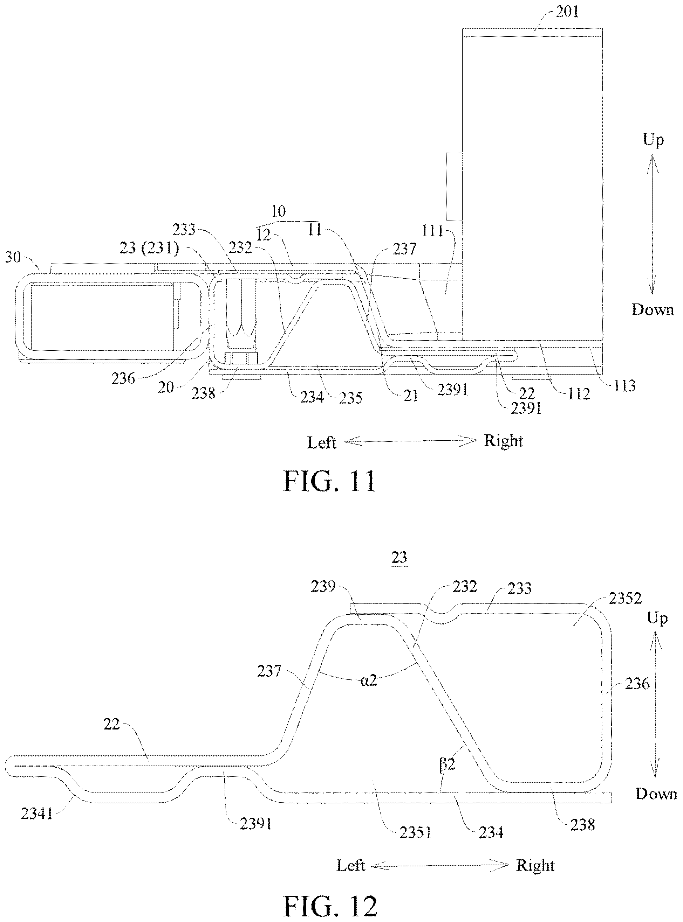

In some embodiments of the present disclosure, as shown in FIGs. 10 to 13, the side beam body 231 defines a cavity 2311, and the side beam body 231 has a partition portion 232. The partition portion 232 is located in the cavity 2311, and the partition portion 232 is obliquely connected between a top wall 233 of the cavity 2311 and a bottom wall 234 of the cavity 2311. The partition portion 232 divides the cavity 2311 into multiple sub-cavities 235. Further, the multiple sub-cavities 235 are arranged in the second direction of the side beam 23 in sequence, or it can be considered that the multiple sub-cavities 235 are arranged in the width direction of the side beam 23 in sequence. When the battery tray 100 is arranged in a pattern as shown in FIG. 11, the width direction of the side beam 23 refers to a left-right direction as shown in FIG. 11.

By obliquely connecting the partition portion 232 between the top wall 233 of the cavity 2311 and the bottom wall 234 of the cavity 2311, the partition portion 232 is supported between the top wall 233 of the cavity 2311 and the bottom wall 234 of the cavity 2311, whereby the structural strength and rigidity of the side beam 23 are increased, the structural stability of the side beam body 231 is increased, and the risk of deformation of the side beam 23 is reduced, to extend the service life of the side beam 23 and the battery tray 100. By arranging the multiple sub-cavities 235 in the width direction of the side beam 23 in sequence, when the sub-cavity 235 of the multiple sub-cavities 235 away from the pressed area 112 of the battery tray 100 is impacted, for example, the sub-cavity 235 on the left side in FIG. 11 is impacted, the impacted sub-cavity 235 can absorb the impact force, which reduces the impact force transmitted to the inside of the battery pack 200, and reduces the risk of damage of the battery core 201 in the battery pack 200, thus improving the safety of the battery pack 200 during use.

Therefore, by means of the side beam 23 according to the present disclosure, the structural strength, rigidity and stability of the side beam 23 is increased, and the risk of deformation of the side beam 23 is reduced, to extend the service life of the side beam 23 and the battery tray 100. When the sub-cavity 235 of the multiple sub-cavities 235 away from the pressed area 112 of the battery tray 100 is impacted, the impacted sub-cavity 235 can absorb the impact force, which reduces the impact force transmitted to the inside of the battery pack 200, and reduces the risk of damage of the battery core 201 or a battery module in the battery pack 200, thus improving the safety of the battery pack 200 during use.

In some embodiments of the present disclosure, as shown in FIGs. 11 and 12, when the side beam 23 is arranged in a pattern as shown in FIG. 11, in a direction from an upper end to a lower end of the side beam 23, the partition portion 232 is arranged to tilt away from the pressed area 112 of the tray bottom plate 10. Alternatively, it can be considered that in an up-down direction of the battery tray 100, the partition portion 232 is arranged to extend obliquely away from the mounting space 21. The partition portion 232 divides the cavity 2311 into two sub-cavities 235, and the two sub-cavities 235 are arranged in the width direction of the side beam 23 in sequence. Through such an arrangement, the structural strength of the side beam 23 is increased, and the stability of the side beam 23 is improved, thereby improving the capability of the side beam 23 to support the battery core 201, and further reducing the risk of deformation of the side frame 20.

In some embodiments of the present disclosure, as shown in FIGs. 11 and 12, the cross-sectional shape of each sub-cavity 235 is triangular or trapezoidal. Through such an arrangement, the structural stability of the side beam 23 is increased, and the risk of deformation of the side beam 23 is further reduced, thereby further extending the service life of the side beam 23 and the battery tray 100.

According to a specific embodiment of the present disclosure, the multiple sub-cavities 235 includes: a first sub-cavity 2351 and a second sub-cavity 2352. The first sub-cavity 2351 is located at a side of the second sub-cavity 2352 close to the pressed area 112. The cross-sectional shape of the first sub-cavity 2351 is triangular, and further, isosceles triangle or equilateral triangle. The bottom wall 234 of the cavity 2311 serves as a bottom wall of the triangle. Through such an arrangement, the structural stability of the side beam 23 is further increased, and the risk of deformation of the side beam 23 is further reduced, thereby further extending the service life of the side beam 23 and the battery tray 100.

In some optional embodiments, the angle between the bottom wall 234 of the cavity 2311 and the partition portion 232 serves as a base angle of the triangle. The base angle is β1 that meets the relation formula: 50°≤β1≤70°. For example, β1 is 50°, 60°, 70° or other values. Through such an arrangement, the structural stability of the side beam 23 is further increased, and the risk of deformation of the side beam 23 is further reduced, thereby further extending the service life of the side beam 23 and the battery tray 100.

In some optional embodiments, the vertex angle of the triangle is α1 that meets the relation formula: 50°≤α1≤70°. For example, α1 is 50°, 60°, 70° or other values. In this way, the cross-sectional shape of the first sub-cavity 2351 is arranged to be an equilateral triangle. Through such an arrangement, the structural stability of the side beam 23 is further increased, and the risk of deformation of the side beam 23 is further reduced, thereby further extending the service life of the side beam 23 and the battery tray 100.

According to another specific embodiment of the present disclosure, as shown in FIGs. 11 and 12, the multiple sub-cavities 235 includes: a first sub-cavity 2351 and a second sub-cavity 2352. The first sub-cavity 2351 is located at a side of the second sub-cavity 2352 close to the pressed area 112. The cross-sectional shape of the first sub-cavity 2351 is arranged to be a trapezoid. Further, the bottom wall 234 of the cavity 2311 serves as a bottom wall of the trapezoid. The angle between the bottom wall 234 of the cavity 2311 and the partition portion 232 serves as a base angle of the trapezoidal shape of the first sub-cavity 2351. The base angle is β2 that meets the relation formula: 50°≤β2≤70°. For example, β2 is 50°, 60°, 70° or other values. Through such an arrangement, the structural stability of the side beam 23 is further increased, and the risk of deformation of the side beam 23 is further reduced, thereby further extending the service life of the side beam 23 and the battery tray 100.

In some optional embodiments, as shown in FIG. 12, the angle between the two waists of the trapezoidal shape of the first sub-cavity 2351 is α2 that meets the relation formula: 50°≤α2≤70°. For example, α2 is 50°, 60°, 70° or other values. Through such an arrangement, the structural stability of the side beam 23 is further increased, and the risk of deformation of the side beam 23 is further reduced, thereby further extending the service life of the side beam 23 and the battery tray 100.

In some embodiments of the present disclosure, as shown in FIG. 12, the cross-sectional shape of the second sub-cavity 2352 is a trapezoid. The bottom wall 234 of the cavity 2311 serves as a top wall of the trapezoidal shape of the second sub-cavity 2352, and the top wall 233 of the cavity 2311 serves as a bottom wall of the trapezoidal shape of the second sub-cavity 2352. Through such an arrangement, the structural stability of the side beam 23 is further increased, and the risk of deformation of the side beam 23 is further reduced, thereby further extending the service life of the side beam 23 and the battery tray 100.

In some embodiments of the present disclosure, the side beam 23 is configured as an integrally formed component. Further, the side beam 23 can be formed of an aluminum material, or the side beam 23 can be formed of a steel material, which is not limited in the present disclosure. The side beam 23 can also be made of other metal materials that have the same function as steel. For example, the side beam 23 is made of a steel material. The side beam 23 can be rolled with the steel material, or the side beam 23 can also be extruded with the steel material. By configuring the side beam 23 as an integrally formed component, the weight bearing capacity of the side beam 23 is improved and the risk of deformation of the side beam 23 is reduced.

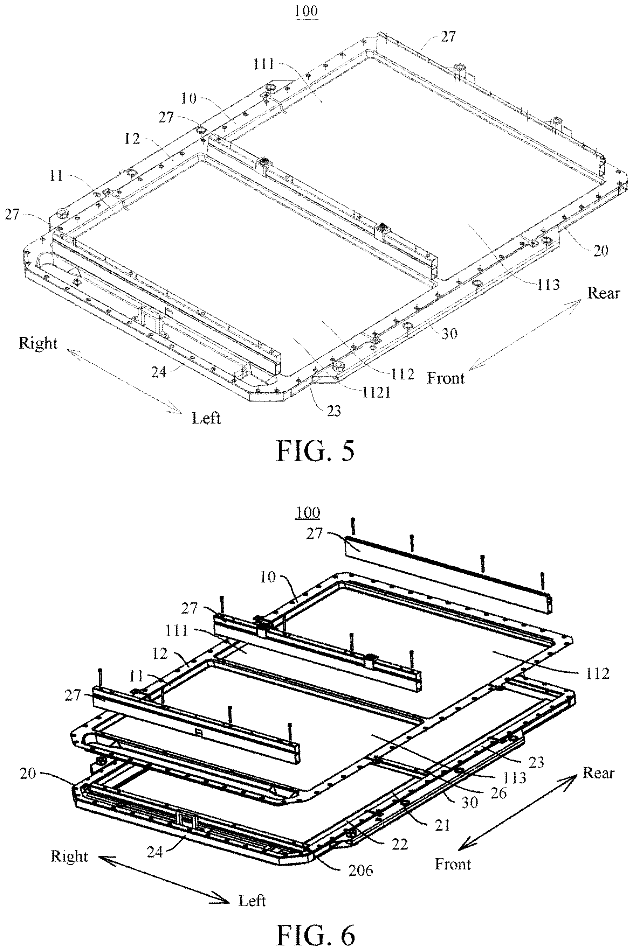

As shown in FIGs. 6 to 13, the tray bottom plate 10 includes a bottom plate body 11 and an extension portion 12. The bottom plate body 11 defines an accommodating groove 111 for accommodating a battery core 201 or a battery module. In the present disclosure, description is made by way of example in which the accommodating groove 111 accommodates the battery core 201. Further, the bottom wall 113 of the accommodating groove 111 has a pressed area 112 for supporting the battery core 201. When the battery core 201 is mounted in the battery tray 100, the battery core 201 is located in the pressed area 112 of the accommodating groove 111. The extension portion 12 is arranged to extend along a peripheral edge of the bottom plate body 11. Further, the extension portion 12 is configured as a loop structure. Particularly, the extension portion 12 is configured as a closed-loop structure.

The extension portion 12 extends along a peripheral edge of the bottom plate body 11. The bottom plate body 11 is mounted to the side beam 23. In the height direction of the battery tray 200, the extension portion 12 is located above the side beam 23 and arranged on the side beam 23. The bottom plate body 11 is mounted in the mounting space 21, and the extension portion 12 is located outside the mounting space 21. In the height direction of the battery tray 100, the extension portion 12 is located above the side frame 20 and arranged on the side frame 20. Further, the extension portion 12 is also arranged corresponding to other structures of the side frame 20. The side beam 23 of the side frame 20 has a supporting portion 22 extending toward the pressed area 112. The supporting portion 22 is configured to support the tray bottom plate 10. Further, the supporting portion 22 is configured to support the pressed area 112 of the tray bottom plate 10. As shown in FIGs. 6, 8 and 11, description is made by way of example in which the battery tray 100 is arranged in an up-down direction in the present disclosure. After the bottom plate body 11 is mounted in the mounting space 21, the extension portion 12 is arranged outside the mounting space 21. In the up-down direction of the battery tray 100, the extension portion 12 is arranged corresponding to the side frame 20. Particularly, as shown in FIG. 11, the extension portion 12 is located above the side frame 20, and the extension portion 12 is arranged to direct face the side frame 20. In the up-down direction of the battery tray 100, the extension portion 12 covers the entire upper surface of the side frame 20.

As shown in FIG. 11, when the battery core 201 is mounted in the accommodating groove 111, the battery core 201 is located in the pressed area 112, and the supporting portion 22 supports the pressed area 112. The weight of the battery core 201 is loaded on the side frame 20.

Moreover, the side frame 20 can be formed by tailor-welding with a metal. After tailor-welding, the strength of the welded structure and necessary flatness of the product need to be ensured. The tailor-welding efficiency is high, which improves the production efficiency of the battery tray 100. Moreover, the tray bottom plate 10 is responsible for sealing; and there is no need for weld grinding and air tightness testing, and no risk of sealing failure caused by welding. The tray bottom plate 10 can be formed by molding with a composite material. The tray bottom plate 10 has high production efficiency, and the precision of the mold is high, so a high flatness can be attained. Accordingly, the size requirement for the battery core 201 is reduced.

In addition, the existing battery tray 100 does not divide the product structure with respect to the functions of weight bearing and sealing. In the production of the battery tray 100, both the overall weight bearing capacity and the sealing performance need to meet the requirements, resulting in low manufacturing efficiency and yield of the battery tray 100. In the present disclosure, the functions of weight bearing and sealing are divided. The side frame 20 is mainly responsible for weight bearing, and the tray bottom plate 10 is responsible for sealing of the battery tray 100. These improve the manufacturing efficiency and yield of the battery tray 100.

Therefore, with the cooperation of the tray bottom plate 10 and the side frame 20 where the side frame 20 bears most of the weight of the battery core 201, and the tray bottom plate 10 bears a small fraction of the weight of the battery core 201; and the tray bottom plate 10 is mainly responsible for sealing, the tray bottom plate 10 can be formed of a lightweight composite material, which is beneficial to the lightweight design and reduction of the production cost of the battery tray 100 and the battery pack 200. After the tray bottom plate 10 and the side frame 20 are assembled, there is no risk of sealing failure of the battery tray 100 caused by welding, and there is no need for weld grinding and air tightness testing of the battery tray 100, thus improving the production efficiency of the battery tray 100.

In some embodiments of the present disclosure, as shown in FIG. 11, when the battery tray 100 is arranged in a pattern as shown in FIG. 11, in the height direction of the battery tray 100, the orthographic projection of the supporting portion 22 and the orthographic projection of the compressed area 112 have an overlapping area. When the battery core 201 is accommodated in the accommodating groove 111, such an arrangement can ensure that the supporting portion 22 supports the battery core 201, and ensure that the side frame 20 is mainly used for bearing the weight of the battery core 201.

In some embodiments of the present disclosure, the bottom wall 113 of the accommodating groove is formed with a pressed area 112, or it can be considered that the pressed area 112 is provided on the bottom wall 113 of the accommodating groove. As shown in FIG. 11, when the battery tray 100 is arranged in a pattern as shown in FIG. 11, the supporting portion 22 is located below the bottom plate body 11, and the supporting portion 22 supports the bottom wall 113 of the accommodating groove. This arrangement ensures that the supporting portion 22 is located below and support the pressed area 112, which can further ensure that the supporting portion 22 supports the battery core 201, and further ensure that the side frame 20 is mainly used for bearing the weight of the battery core 201. Consequently, the arrangement of the position of the pressed area 112 is reasonable.

In some embodiments of the present disclosure, multiple side beams 23 are provided. Two side beams 23 among the multiple side beams 23 arranged opposite to each other in a width direction of the battery pack 200 both have the supporting portion 22, where the width direction of the battery pack 200 refers to the left-right direction as shown in FIG. 1. Alternatively, two side beams 23 among the multiple side beams 23 arranged opposite to each other in a length direction of the battery pack 200 both have the supporting portion 22, where the length direction of the battery pack 200 refers to the front-rear direction in FIG. 1. Each battery core 201 is ensured to be supported by the supporting portion 22, which can further ensure that the supporting portion 22 supports the battery core 201, and further ensure that the side frame 20 is mainly used for bearing the weight of the battery core 201. Consequently, the arrangement of the position of the supporting portion 22 is reasonable.

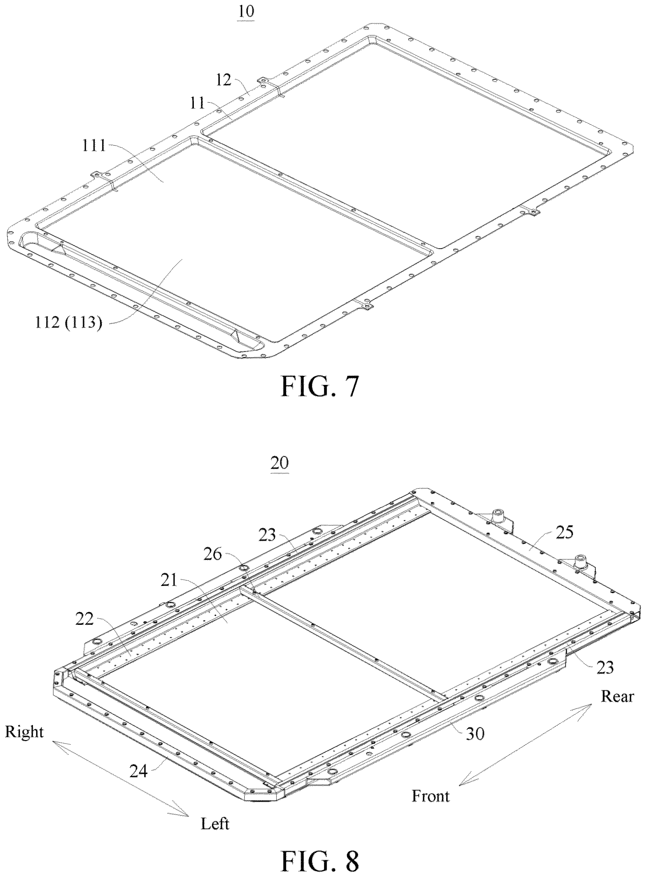

In some embodiments of the present disclosure, as shown in FIGs. 6 and 8, the side frame 20 may further include a front beam 24 and a rear beam 25. The side beam 23, the front beam 24 and the rear beam 25 are connected to define the mounting space 21. The side beam 23 has the supporting portion 22. Two side beams 23 are provided. At least one of the two side beams 23 is provided with the supporting portion 22. One rear beam 25 and one front beam 24 are provided. The connection of the two side beams 23, the front beam 24 and the rear beam 25 includes direct connection and indirect connection. For example, the connection of the side beam 23 and the front beam 24 is described. The side beam 23 and the front beam 24 can be directly connected, or the side beam 23 and the front beam 24 can also be indirectly connected by an additional beam. When the side frame 20 is arranged in a pattern as shown in FIG. 8, the two side beams 23 are arranged at intervals in the left-right direction in FIG. 8, and the front beam 24 and the rear beam 25 are connected between the two side beams 23. The front beam 24 and the rear beam 25 are arranged at intervals in the front-rear direction of the side frame 20. In this way, the front beam 24, the rear beam 25 and the two side beams 23 jointly define the mounting space 21. When the battery core 201 is arranged to extend in the left-right direction as shown in FIG. 8, by arranging the supporting portion 22 on the side beam 23, each battery core 201 is ensured to be supported by the supporting portion 22, which can further ensure that the supporting portion 22 supports the battery core 201, and further ensure that the side frame 20 is mainly used for bearing the weight of the battery core 201. Consequently, the arrangement of the position of the supporting portion 22 is reasonable. It can be understood that when the battery tray 100 is mounted on a vehicle 2000, the width direction of the battery tray 100 may be consistent with the width direction of the vehicle, and the length direction of the battery tray 100 may be consistent with the length direction of the vehicle. Definitely, the width direction of the battery tray 100 may be consistent with the length direction of the vehicle, and the length direction of the battery tray 100 may be consistent with the width direction of the vehicle.

In some embodiments of the present disclosure, as shown in FIG. 8, the side frame 20 further includes a supporting beam 26. The supporting beam 26 is connected between two side beams 23, the supporting beam 26 is connected between the front beam 24 and the rear beam 25, the supporting beam 26 is connected between the front beam 24 and the side beam 23, or the supporting beam 26 is connected between the rear beam 25 and the side beam 23. This arrangement can improve the structural strength of the side frame 20 and thus the structural strength of the battery tray 100.

In some embodiments of the present disclosure, as shown in FIGs. 5 and 6, the battery tray 100 further includes an expansion beam 27. The expansion beam 27 is provided on a side of the tray bottom plate 10 away from the side frame 20. When the battery tray 100 is arranged in a pattern as shown in FIGs. 5 and 6, the expansion beam 27 is provided above the tray bottom plate 10, and the expansion beam 27 is mounted on the supporting beam 26 by a bolt. After the battery core 201 is mounted in the accommodating groove 111, when the battery core 201 expands, the expansion beam 27 restrains the battery core 201, to improve the safety of the battery core 201 during use.

Further, multiple supporting beams 26 are provided. The multiple supporting beams 26 are arranged at intervals in sequence in a length direction of the side beam 23. The length direction of the side beam 23 refers to the front-rear direction in FIG. 6. Multiple expansion beams 27 are provided, and the multiple expansion beams 27 are arranged at intervals in sequence in the length direction of the side beam 23. The multiple expansion beams 27 and the multiple supporting beams 26 are arranged in one-to-one correspondence, and one expansion beam 27 is mounted on one supporting beam 26 by a bolt, to stably mount the expansion beam 27 on the side frame 20.

In some embodiments of the present disclosure, as shown in FIG. 11, the supporting portion 22 is provided close to the lower end of the side beam 23, or it can be considered that the supporting portion 22 is provided close to an end portion of the side beam 23 away from the tray bottom plate 10. After the bottom plate body 11 is mounted in the mounting space 21, by providing the supporting portion 22 close to the end portion of the side beam 23 away from the tray bottom plate 10, the supporting portion 22 is ensured to be located below and support the bottom plate body 11, and the bottom plate body 11 is ensured to be mounted in the mounting space 21.

In some embodiments of the present disclosure, as shown in FIGs. 5 to 7, and 11, when the battery tray 100 is arranged in a pattern as shown in FIG. 11, the upper end of the accommodating groove 111 is arranged to be open, and the battery core 201 can be placed in the accommodating groove 111 through the open end of the accommodating groove 111. The extension portion 12 is arranged to extend along the open end of the accommodating groove 111. As shown in FIG. 11, the extension portion 12 is connected to an upper end of the bottom plate body 11. After the bottom plate body 11 is mounted in the mounting space 21, such an arrangement enables the extension portion 12 to be provided outside the accommodating groove 111, and ensures that the extension portion 12 is arranged corresponding to the side frame 20 in the up-down direction of the battery tray 100, thereby ensuring the sealing of the battery tray 100.

In some embodiments of the present disclosure, as shown in FIGs. 8, 10 and 11, a surface of the supporting portion 22 close to the tray bottom plate 10 is configured as a planar surface. That is to say, as shown in FIG. 11, the upper surface of the supporting portion 22 is a planar surface, and such an arrangement can ensure the supporting area between the supporting portion 22 and the bottom plate body 11 and allows the supporting portion 22 to well support the battery core 201.

In some embodiments of the present disclosure, the tray bottom plate 10 is bonded to the side frame 20. Further, the tray bottom plate 10 and the side frame 20 are bonded by applying an adhesive (such as structural adhesive) between the tray bottom plate 10 and the side frame 20. The dimensional tolerance of the side frame 20 is absorbed by controlling the thickness of the adhesive. Moreover, the tray bottom plate 10 has good flatness, and the manufacturing requirements for the tray bottom plate 10 and the side frame 20 are reduced by taking advantage of the characteristic that the adhesive can absorb the tolerance. When the existing tray bottom plate 10 and the side frame 20 are welded, the tray bottom plate 10 tend to deform during the welding process, which increases the size requirements for the battery core 201 in the subsequent assembly process of the battery pack 200, and affects the assembly efficiency of the battery pack 200. In the present disclosure, the tray bottom plate 10 and the side frame 20 are bonded to avoid the welded connection of the tray bottom plate 10 and the side frame 20. This can prevent the deformation of the tray bottom plate 10, reduce the size requirements for the battery core 201 in the subsequent assembly process of the battery pack 200, and improve the assembly efficiency of the battery pack 200.

In some embodiments of the present disclosure, the tray bottom plate 10 is configured as an integrally formed component. The tray bottom plate 10 is molded with a lightweight composite material. During the molding process, the tray bottom plate 10 has good air tightness formed after the resin is melted to flow and then solidified, and the tray bottom plate 10 is ensured to have good flatness and dimensional accuracy by molding, thus ensuring the sealing function of the tray bottom plate 10.

In some embodiments of the present disclosure, the side frame 20 is configured as a metal piece, the side frame 20 can be formed of an aluminum material, or the side frame 20 can also be formed of a steel material, which is not limited in the present disclosure. The side frame 20 can also be made of other metal materials that have the same function as steel. For example, the side frame 20 is made of a steel material, where the side frame 20 is rolled with the steel material, or the side frame 20 can also be extruded with the steel material. By configuring the side frame 20 as a metal member, the weight bearing capacity of the side frame 20 can be improved and the risk of deformation of the side frame 20 can be reduced.

In some optional embodiments, as shown in FIGs. 10 and 11, in the width direction of the side beam 23, the cavity 2311 has a first side wall 236 arranged away from the accommodating groove 111. The first side wall 236 is connected between the top wall 233 of the cavity 2311 and the bottom wall 234 of the cavity 2311, and the first side wall 236 is connected to the partition portion 232. Further, as shown in FIG. 11, a lower end of the first side wall 236 is connected with a first connecting portion 238 extending toward the interior of the cavity 2311. The first connecting portion 238 is located at a side of the bottom wall 234 of the cavity 2311 facing the top wall 233 of the cavity 2311, the first side wall 236 is connected to the bottom wall 234 of the cavity 2311 and the partition portion 232 through the first connecting portion 238, and the first connecting portion 238 is fixedly connected to the bottom wall 234 of the cavity 2311. For example, the first connecting portion 238 is welded to the bottom wall 234 of the cavity 2311. Through such an arrangement, the structural strength of the side beam 23 is further increased, and the stability of the side beam 23 is further improved.

In some optional embodiments, as shown in FIGs. 10 and 11, in the width direction of the side beam 23, the cavity 2311 has a second side wall 237 close to the accommodating groove 111. The second side wall 237 is connected between the top wall 233 of the cavity 2311 and the bottom wall 234 of the cavity 2311, and the second side wall 237 is connected to the partition portion 232. Further, as shown in FIG. 11, an upper end of the second side wall 237 is connected with a second connecting portion 239 extending toward the interior of the cavity 2311. The second connecting portion 239 is located at a side of the top wall 233 of the cavity 2311 facing the bottom wall 234 of the cavity 2311, the second side wall 237 is connected to the top wall 233 of the cavity 2311 and the partition portion 232 through the second connecting portion 239, and the second connecting portion 239 is fixedly connected to the top wall 233 of the cavity 2311. For example, the second connecting portion 239 is welded to the top wall 233 of the cavity 2311. The top wall 233 of the cavity 2311, the bottom wall 234 of the cavity 2311, the first side wall 236 and the second side wall 237 define the cavity 2311 together. Through such an arrangement, the structural strength of the side beam 23 is further increased, and the stability of the side beam 23 is further improved.

In some optional embodiments, as shown in FIGs. 10 and 11, a lower end of the second side wall 237 is connected with the supporting portion 22, and the second side wall 237 is connected to the bottom wall 234 of the cavity 2311 through the supporting portion 22. Further, as shown in FIG. 12, in the width direction of the side beam 23, the bottom wall 234 of the cavity 2311 has a structure strengthening portion 2341 extending below the supporting portion 22. The structure strengthening portion 2341 is connected to an end portion of the supporting portion 22 close to the tray bottom plate 10, or it can be considered that the structure strengthening portion 2341 extends below the supporting portion 22. The structure strengthening portion 2341 is connected to an end portion of the supporting portion 22 close to the mounting space 21. Further, the structure strengthening portion 2341 is provided with a boss structure 2391 protruding toward the supporting portion 22, and the boss structure 2391 is connected to the supporting portion 22. Through such an arrangement, the structural strength of the side beam 23 is further increased, and the stability of the side beam 23 is further improved.

In some optional embodiments, the structure strengthening portion 2341 is provided with multiple boss structures 2391. The multiple boss structures 2391 are arranged in the width direction of the side beam 23 in sequence. At least one boss structure 2391 of the multiple boss structures 2391 is located below the pressed area 112. Such an arrangement enables the boss structure 2391 to support the battery core 201, thereby further improving the weight bearing capacity of the side frame 20 and reducing the risk of deformation of the supporting portion 22.

In some embodiments of the present disclosure, as shown in FIGs. 5 and 6, the side frame 20 is connected with a lifting lug structure 30. The lifting lug structure 30 is provided with a mounting hole, and the lifting lug structure 30 is mounted on the vehicle 2000 by a fastener (such as a bolt), so as to achieve the purpose of mounting the battery pack 200 on the vehicle 2000.

In some embodiments of the present disclosure, as shown in FIGs. 1 to 11, the battery pack 200 includes a cover 40. The cover 40 and the tray bottom plate 10 jointly define an accommodating cavity 41 for accommodating the battery core 201, and the cover 40 is connected to the side beam 23. Further, the cover 40 is covered at an open end of the accommodating groove 111 to define the accommodating cavity 41. The extension portion 12 is sandwiched between the cover 40 and the side frame 20. The bolt extends through the cover 40. The cover 40, the tray bottom plate 10 and the side frame 20 are assembled together by the extension portion 12 and the side frame 20. Further, a seal 203 (such as a sealing ring) is sandwiched between the extension portion 12 and the cover 40, and the seal 203 can seal the accommodating cavity 41. The cover 40 and the tray bottom plate 10 define a sealed insulating cavity (i.e. the accommodating cavity 41). After the battery core 201 is placed in the accommodating cavity 41, the battery core 201 can be completely isolated from the side frame 20, such that the battery core 201 is in a completely insulated environment, and the battery pack 200 has no risk of electric leakage.

In some embodiments of the present disclosure, as shown in FIG. 1, the battery pack 200 further includes: a press plate 202. The press plate 202 is configured as a closed ring structure. The cover 40, the seal 203 and the extension portion 12 are sandwiched between the press plate 202 and the side frame 20. A bolt extends through the press plate 202, the cover 40, the extension portion 12 and the side frame 20 to assemble the press plate 202, the cover 40, the tray bottom plate 10 and the side frame 20 together. The press plate 202 allows the whole seal 203 to be uniformly pressed, and ensures the reliable sealing of the accommodating cavity 41.

A vehicle 2000 according to an embodiment of the present disclosure includes a battery pack 200 according to above embodiment. The battery pack 200 is mounted on the vehicle 2000 to provide electric energy for the vehicle 2000. The side frame 20 of the battery pack 200 bears most of the weight of the battery core 201, and the tray bottom plate 10 bears a small fraction of the weight of the battery core 201; and the tray bottom plate 10 is mainly responsible for sealing. The tray bottom plate 10 can be formed of a lightweight composite material, which is beneficial to the lightweight design and reduction of the production cost of the battery tray 100, the battery pack 200, and the vehicle 2000. After the tray bottom plate 10 and the side frame 20 are assembled, there is no risk of sealing failure of the battery tray 100 caused by welding, and there is no need for weld grinding and air tightness testing of the battery tray 100, which improves the production efficiency of the battery tray 100 and the vehicle 2000. Moreover, the tray bottom plate 10 formed of a composite material has excellent electrical insulation performance. When a serious bottom scratching accident occurs to the vehicle 2000, the battery pack 200 will not have the risks such as high-voltage arcing, so the safety of the vehicle 2000 is improved.

Moreover, by setting the overlapping length between the orthographic projection of the supporting portion 22 and the orthographic projection of the electrode core pressing area 1121 to be greater than or equal to 9 mm, the supporting portion 22 is enabled to well support the electrode core 2011 while the structure strength of the battery pack 200 is ensured, and the risk of vibration failure of the electrode core 2011 is reduced, to reduce the risk of vibration failure of the battery pack 200, and ensure the vibration safety of the battery pack 200.

In the description of the specification, the description with reference to the terms "an embodiment", "some embodiments", "exemplary embodiments", "example", "specific example", or "some examples" and so on means that a specific feature, structure, material, or characteristic that is described with reference to the embodiment or the example is included in at least one embodiment or example of the present disclosure. In the specification, exemplary descriptions of the foregoing terms do not necessarily refer to the same embodiment or example. In addition, the described specific features, structures, materials, or characteristics may be combined in a proper manner in any one or more of the embodiments or examples.

Although the embodiments of the present disclosure have been shown and described, a person of ordinary skill in the art should understand that various changes, modifications, replacements and variations can be made to the embodiments without departing from the principles and spirit of the present disclosure, and the scope of the present disclosure is as defined by the appended claims and their equivalents.

## Claims

1. A battery pack (200), comprising:
a battery core (201);
a tray bottom plate (10), the tray bottom plate (10) having a pressed area (112) configured to support the battery core (201), and the pressed area (112) having an electrode core pressing area (1121) configured to support an electrode core (2011) of the battery core (201);
a side beam (23), the side beam (23) having a supporting portion (22) extending toward the pressed area (112), the supporting portion (22) being configured to support the tray bottom plate (10), wherein, in a first direction of the side beam (23), an orthographic projection of the supporting portion (22) and an orthographic projection of the electrode core pressing area (1121) have an overlapping area; and, in a second direction of the side beam (23), the orthographic projection of the supporting portion (22) and the orthographic projection of the electrode core pressing area (1121) have an overlapping length of M1, and M1 meets the relation formula: 9mm≤M1, the first direction of the side beam (23) being perpendicular to the second direction of the side beam (23).

2. The battery pack (200) according to claim 1, wherein M1≤300mm.

3. The battery pack (200) according to claim 1 or 2, wherein the orthographic projection of the supporting portion (22) in the first direction of the side beam (23) and an orthographic projection of the battery core (201) in the first direction of the side beam (23) has an overlapping length of M2 in the second direction of the side beam (23), the battery core (201) has a length of M3, and 0. 1≤M2/M3≤0.125; and the length direction of the battery core (201) is consistent with the second direction of the side beam (23).

4. The battery pack (200) according to any one of claim 1 to 3, wherein the orthographic projection of the supporting portion (22) in the first direction of the side beam (23) and an orthographic projection of the pressed area (112) in the first direction of the side beam (23) has an overlapping length of M2 in the second direction of the side beam (23), and M2 meets the relation formula: 12mm≤M2≤18mm.

5. The battery pack (200) according to any one of claims 1 to 4, wherein the length of the supporting portion (22) in the second direction of the side beam (23) is M4, and M4 meets the relation formula: 45mm ≤ M4 ≤ 70mm.

6. The battery pack (200) according to any one of claims 1 to 5, wherein the side beam (23) comprises a side beam body (231), the side beam body (231) is connected to the supporting portion (22) at a side close to the pressed area (112), the distance between the pressed area (112) and an end of the supporting portion (22) away from the pressed area (112) is M5, and M5 meets the relation formula: 33mm≤M5≤52mm.

7. The battery pack (200) according to any one of claims 1 to 6, wherein the side beam (23) is configured as an integrally formed component.

8. The battery pack (200) according to any one of claims 1 to 7, wherein the side beam body (231) defines a cavity (2311), the side beam body (231) has a partition portion (232), the partition portion (232) is located in the cavity (2311), and the partition portion (232) is obliquely connected between a top wall (233) and a bottom wall (234) of the cavity (2311) to divide the cavity (2311) into a plurality of sub-cavities (235).

9. The battery pack (200) according to claim 8, wherein the plurality of sub-cavities (235) are arranged in the second direction of the side beam (23) in sequence.

10. The battery pack (200) according to any one of claims 1 to 9, wherein the tray bottom plate (10) comprises a bottom plate body (11) and an extension portion (12), the bottom plate body (11) defines an accommodating groove (111) for accommodating the battery core (201), a bottom wall (113) of the accommodating groove (111) has the pressed area (112), the extension portion (12) extends along a peripheral edge of the bottom plate body (11), the bottom plate body (11) is mounted to the side beam (23), and the extension portion (12) is located above the side beam (23) and arranged on the side beam (23) in a height direction of the battery pack (200).

11. The battery pack (200) according to claim 10, further comprising: a cover (40), the cover (40) being covered at an open end of the accommodating groove (111) to define an accommodating cavity (41) configured to accommodate the battery core (201), and the cover (40) being connected to the side beam (23).

12. The battery pack (200) according to any one of claims 1 to 11, wherein a plurality of side beams (23) are provided, two side beams (23) among the plurality of side beams (23) arranged opposite to each other in a width direction of the battery pack (200) both have the supporting portion (22), or two side beams (23) among the plurality of side beams (23) arranged opposite to each other in a length direction of the battery pack (200) both have the supporting portion (22).

13. A vehicle (2000), comprising a battery pack (200) according to any one of claims 1 to 12.
